# EUROPEAN PATENT APPLICATION

(11) **EP 4 768 987 A1**
(43) Date of publication of application: **01.07.2026**
(21) Application number: 25227209.1
(22) Date of filing: 24.12.2025
(51) Int. Cl.: G01S 7/4865, G01S 7/487, G01S 17/10

(54) **DISTANCE AND REFLECTIVITY MEASUREMENT METHOD, APPARATUS, STORAGE MEDIUM AND LIDAR**

(30) Priority: 30.12.2024 CN 202411992524
(71) Applicant: Suteng Innovation Technology Co., Ltd, Shenzhen City Guangdong 518000 (CN)
(72) Inventor: FENG, Xi, Shenzhen City (CN)
(74) Representative: Ran, Handong

(57) **Abstract**

A distance and reflectivity measurement method, apparatus, storage medium, and lidar are disclosed. The lidar acquires an echo signal from light reflected by a target object. A distance threshold measures the echo signal to determine the target's distance relative to the lidar. A reflectivity threshold, higher than the distance threshold, measures the echo signal to determine the target's reflectivity. Using separate thresholds, with the reflectivity threshold being higher, provides high accuracy for distance measurement and high differentiation for reflectivity measurement, improving the overall accuracy of calculating both distance and reflectivity for the target object.

## Description

### TECHNICAL FIELD

The present application relates to the technical field of laser signal processing, and particularly to a distance and reflectivity measurement method, apparatus, storage medium and lidar.

### BACKGROUND

As an important sensor in intelligent driving systems, lidar has been prioritized by major automobile manufacturers. Lidar operates by emitting detection laser light, receiving echo light generated by the reflection of said detection light from a target object, and performing photoelectric conversion to obtain an echo signal in the form of an electrical signal. It further analyzes the information carried by the echo signal to perform distance measurement and reflectivity measurement, thereby achieving environmental perception and constructing a three-dimensional physical image.

However, in related technologies, when lidar performs distance measurement and reflectivity measurement, the accuracy of the obtained distance measurement results and reflectivity is relatively low.

### SUMMARY

Embodiments of the present application provide a distance and reflectivity measurement method, apparatus, storage medium, and lidar, which can improve the accuracy of distance measurement results and reflectivity calculations.

In a first aspect, an embodiment of the present application provides a distance and reflectivity measurement method, comprising:
acquiring an echo signal according to echo light reflected from a target object, wherein the echo signal is an electrical signal corresponding to the echo light; and
measuring the echo signal according to a distance threshold, and measuring the echo signal according to a reflectivity threshold, wherein the distance threshold is used for determining a distance of the target object relative to a lidar, the reflectivity threshold is used for determining a reflectivity of the target object, and the reflectivity threshold is higher than the distance threshold.

In some embodiments, a distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold;
the measuring the echo signal according to a distance threshold comprises:
determining at least one first rising edge moment corresponding to the echo signal according to the echo signal and the plurality of distance thresholds; and
determining the distance of the target object relative to the lidar according to a first candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment.

In some embodiments, the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold;
the measuring the echo signal according to a reflectivity threshold comprises:
determining at least one second rising edge moment corresponding to the echo signal and an echo pulse width corresponding to the second rising edge moment, according to the echo signal and the plurality of reflectivity thresholds; and
determining the reflectivity of the target object according to an echo pulse width corresponding to a second candidate rising edge moment, wherein, if a second distance interval in which a distance corresponding to the second rising edge moment determined by the reflectivity threshold is located is the same as the second distance interval corresponding to the same reflectivity threshold, then the second rising edge moment is the second candidate rising edge moment.

In some embodiments, the distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold; the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold;
the measuring the echo signal according to a distance threshold and measuring the echo signal according to a reflectivity threshold comprise:
determining at least one first rising edge moment corresponding to the echo signal according to the echo signal and the plurality of distance thresholds;
determining at least one second rising edge moment corresponding to the echo signal according to the echo signal and the plurality of reflectivity thresholds; and
if a difference between the second candidate rising edge moment and the first candidate rising edge moment is less than a preset threshold, then determining the distance of the target object relative to the lidar according to the first candidate rising edge moment, and determining the reflectivity of the target object according to an echo pulse width corresponding to the second candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment, and if a second distance interval in which a distance corresponding to the second rising edge moment determined by the reflectivity threshold is located is the same as the second distance interval corresponding to the same reflectivity threshold, then the second rising edge moment is the second candidate rising edge moment.

In some embodiments, one said first distance interval corresponds to one said second distance interval, and the first distance interval is the same as the corresponding second distance interval.

In some embodiments, a first preset distance interval is one of the first distance intervals, a second preset distance interval is one of the second distance intervals, and a lower limit value of the second preset distance interval is greater than or equal to an upper limit value of the first preset distance interval;
a distance threshold corresponding to the first preset distance interval and a reflectivity threshold corresponding to the second preset distance interval are the same threshold.

In some embodiments, before the step of measuring the echo signal according to a distance threshold and measuring the echo signal according to a reflectivity threshold, the method comprises:
determining at least one first rising edge moment according to the echo signal and a plurality of distance thresholds;
determining a distance threshold for detecting distance and a reflectivity threshold for detecting reflectivity according to the at least one first rising edge moment;
wherein, the plurality of thresholds comprise distance thresholds and reflectivity thresholds,
the distance measurement range of the lidar comprises a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with the plurality of distance thresholds and a plurality of reflectivity thresholds, and each first distance interval corresponds to one distance threshold and one reflectivity threshold.

In a second aspect, an embodiment of the present application further provides a laser signal processing apparatus, comprising:
a signal transceiver module, configured to acquire an echo signal according to echo light reflected from a target object, wherein the echo signal is an electrical signal corresponding to the echo light; and
a signal processing module, configured to measure the echo signal according to a distance threshold and measure the echo signal according to a reflectivity threshold, wherein the distance threshold is used for determining a distance of the target object relative to a lidar, the reflectivity threshold is used for determining a reflectivity of the target object, and the reflectivity threshold is higher than the distance threshold.

In some embodiments, the distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold; the signal processing module is configured to:
determine at least one first rising edge moment corresponding to the echo signal according to the echo signal and the plurality of distance thresholds; and
determine the distance of the target object relative to the lidar according to a first candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment.

In some embodiments, the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold; the signal processing module is configured to:
determine at least one second rising edge moment corresponding to the echo signal and an echo pulse width corresponding to the second rising edge moment, according to the echo signal and the plurality of reflectivity thresholds; and
determine the reflectivity of the target object according to an echo pulse width corresponding to a second candidate rising edge moment, wherein, if a second distance interval in which a distance corresponding to the second rising edge moment determined by the reflectivity threshold is located is the same as the second distance interval corresponding to the same reflectivity threshold, then the second rising edge moment is the second candidate rising edge moment.

In some embodiments, the distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold; the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold; the signal processing module is configured to:
determine at least one first rising edge moment corresponding to the echo signal according to the echo signal and the plurality of distance thresholds;
determine at least one second rising edge moment corresponding to the echo signal according to the echo signal and the plurality of reflectivity thresholds; and
if a difference between the second candidate rising edge moment and the first candidate rising edge moment is less than a preset threshold, then determine the distance of the target object relative to the lidar according to the first candidate rising edge moment, and determine the reflectivity of the target object according to an echo pulse width corresponding to the second candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment, and if a second distance interval in which a distance corresponding to the second rising edge moment determined by the reflectivity threshold is located is the same as the second distance interval corresponding to the same reflectivity threshold, then the second rising edge moment is the second candidate rising edge moment.

In some embodiments, one said first distance interval corresponds to one said second distance interval, and the first distance interval is the same as the corresponding second distance interval.

In some embodiments, a first preset distance interval is one of the first distance intervals, a second preset distance interval is one of the second distance intervals, and a lower limit value of the second preset distance interval is greater than or equal to an upper limit value of the first preset distance interval; a distance threshold corresponding to the first preset distance interval and a reflectivity threshold corresponding to the second preset distance interval are the same threshold.

In some embodiments, the signal processing module is configured to:
determine at least one rising edge moment according to the echo signal and a plurality of distance thresholds;
determine a distance threshold for detecting distance and a reflectivity threshold for detecting reflectivity according to the at least one first rising edge moment;
wherein, the plurality of thresholds comprise distance thresholds and reflectivity thresholds,
the distance measurement range of the lidar comprises a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with the plurality of distance thresholds and a plurality of reflectivity thresholds, and each first distance interval corresponds to one distance threshold and one reflectivity threshold.

In a third aspect, an embodiment of the present application further provides a computer-readable storage medium, having a computer program stored thereon, wherein when the computer program is run on a computer, the computer is caused to execute the distance and reflectivity measurement method provided by any embodiment of the present application.

In a fourth aspect, an embodiment of the present application further provides a lidar, comprising a processor and a memory, wherein the memory has a computer program stored thereon, and the processor, by calling the computer program, is configured to execute the distance and reflectivity measurement method provided by any embodiment of the present application.

The technical solutions provided by the embodiments of the present application are applied to a lidar. The lidar acquires an echo signal according to echo light reflected from a target object, wherein the echo signal is an electrical signal corresponding to the echo light, and measures the echo signal according to a distance threshold and measures the echo signal according to a reflectivity threshold, wherein the distance threshold is used for determining a distance of the target object relative to the lidar, the reflectivity threshold is used for determining a reflectivity of the target object, and the reflectivity threshold is higher than the distance threshold. In the present application, by using different threshold values to respectively determine the distance and the reflectivity of the target object, and by setting the reflectivity threshold higher than the distance threshold, high distance measurement accuracy is achieved when measuring the distance of the target object, and high reflectivity differentiation is achieved when measuring the reflectivity of the target object, thereby improving the accuracy of distance measurement result calculation and reflectivity calculation for the target object.

### BRIEF DESCRIPTION OF DRAWINGS

To more clearly illustrate the technical solutions in the embodiments of the present application, the drawings used in the description of the embodiments will be briefly introduced below. Obviously, the drawings in the following description are only some embodiments of the present application. For those skilled in the art, other drawings can be obtained based on these drawings without creative effort.
FIG. 1 is a schematic diagram illustrating processing echo signals corresponding to two target objects at the same distance but with different reflectivities using thresholds of different magnitudes, according to an embodiment of the present application.
FIG. 2 is a schematic diagram illustrating wave detection performed on a certain echo signal using a single threshold, where the signal under test may contain noise signals, according to an embodiment of the present application.
FIG. 3 is a schematic diagram illustrating processing echo signals corresponding to multiple target objects at the same distance but with different reflectivities using the same threshold, according to an embodiment of the present application.
FIG. 4 is a first schematic flowchart of a distance and reflectivity measurement method according to an embodiment of the present application.
FIG. 5 is a schematic flowchart of step S220 according to an embodiment of the present application.
FIG. 6 is a schematic diagram illustrating detection processing performed on multiple target objects at different distances using multiple thresholds, according to an embodiment of the present application.
FIG. 7 is a schematic structural diagram of a laser signal processing apparatus according to an embodiment of the present application.
FIG. 8 is a schematic structural diagram of a lidar according to an embodiment of the present application.

### DETAILED DESCRIPTION

The technical solutions in the embodiments of the present application will be clearly and completely described below with reference to the drawings in the embodiments of the present application. Obviously, the described embodiments are only a part of the embodiments of the present application, and not all of them. Based on the embodiments in the present application, all other embodiments obtained by those of ordinary skill in the art without creative efforts shall fall within the protection scope of the present application.

The mention of "embodiment" in this document means that a specific feature, structure, or characteristic described in connection with the embodiment may be included in at least one embodiment of the present application. The appearance of this phrase in various places in the specification does not necessarily refer to the same embodiment, nor is it an independent or alternative embodiment that is mutually exclusive with other embodiments. Those skilled in the art explicitly and implicitly understand that the embodiments described herein can be combined with other embodiments.

As an important sensor in intelligent driving systems, lidar has been prioritized by major automobile manufacturers. Lidar operates by emitting detection laser light, receiving echo light generated by the reflection of said detection light from a target object, and performing photoelectric conversion to obtain an echo signal in the form of an electrical signal. It further analyzes the information carried by the echo signal to perform distance measurement and reflectivity measurement, thereby achieving environmental perception and constructing a three-dimensional physical image.

However, in related technologies, when lidar performs distance measurement and reflectivity measurement, the accuracy of the obtained distance measurement results and reflectivity is relatively low.

Through research, the applicant has found that for two target objects at the same distance but with different reflectivities, the target object with higher reflectivity has stronger echo energy, and the amplitude of the signal after photoelectric conversion is generally higher, while the target object with lower reflectivity has a weaker echo, and the amplitude of the signal after photoelectric conversion is generally lower. After the echo signal passes through the threshold detection of a Time to Digital Converter (TDC), a rising edge moment and an echo pulse width can be obtained. The rising edge moment is used to convert into the distance of the target object, and the echo pulse width is used to calculate the reflectivity. Due to the influence of the echo waveform, the results obtained by different threshold levels when detecting the same echo signal have certain differences, and the same threshold detecting echo signals of different amplitudes at the same distance also has certain differences. Generally speaking, under the same other conditions, the higher the threshold, the later the rising edge moment and the smaller the pulse width; under the same other conditions, the higher the amplitude of the echo signal, the earlier the rising edge moment and the larger the pulse width.

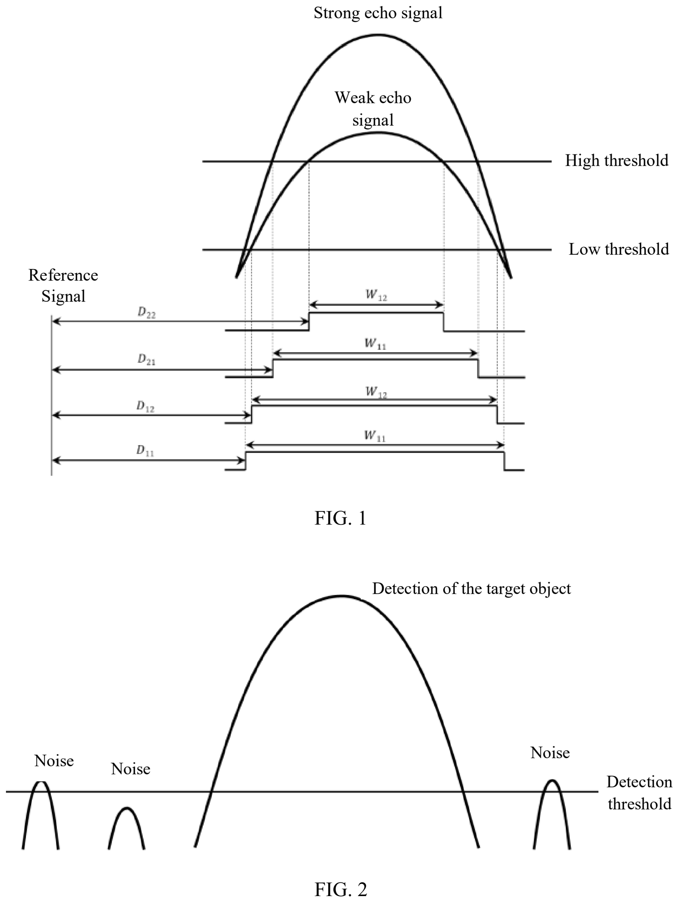

Specifically, please refer to FIG. 1. The strong echo signal and the weak echo signal in the figure represent the echo signals corresponding to two target objects with different reflectivities at the same distance. Since the distance of the target object is proportional to the flight time of the laser, FIG. 1 schematically shows two thresholds used for detection: a high threshold and a low threshold. D11, D12, D21, and D22 can represent the distances directly calculated from the rising edge moments for four scenarios, namely: strong echo with a low threshold, weak echo with a low threshold, strong echo with a high threshold, and weak echo with a high threshold, respectively. W11, W12, W21, and W22 can represent the corresponding echo pulse widths, respectively. The following pattern can be obtained from the comparison in the figure: the lower the detection threshold, the smaller the variation of the distance measurement result with the echo signal strength, and the higher the distance measurement accuracy, but correspondingly, the echo pulse width also changes less with the signal strength, resulting in poor reflectivity differentiation; conversely, the higher the detection threshold, the greater the distance measurement error, but the better the reflectivity differentiation.

When the detection threshold is low to a certain extent, it may detect noise such as background light and crosstalk, affecting the detection of the target object. Please refer to FIG. 2, which is a schematic diagram of possible noise signals when using a single threshold for wave detection on a certain echo signal, according to an embodiment of the present application. The content shown in the figure indicates that the detection threshold for distance measurement is not the lower the better, but as low as possible without affecting the echo signal detection rate. Generally, it should be higher than the noise estimate.

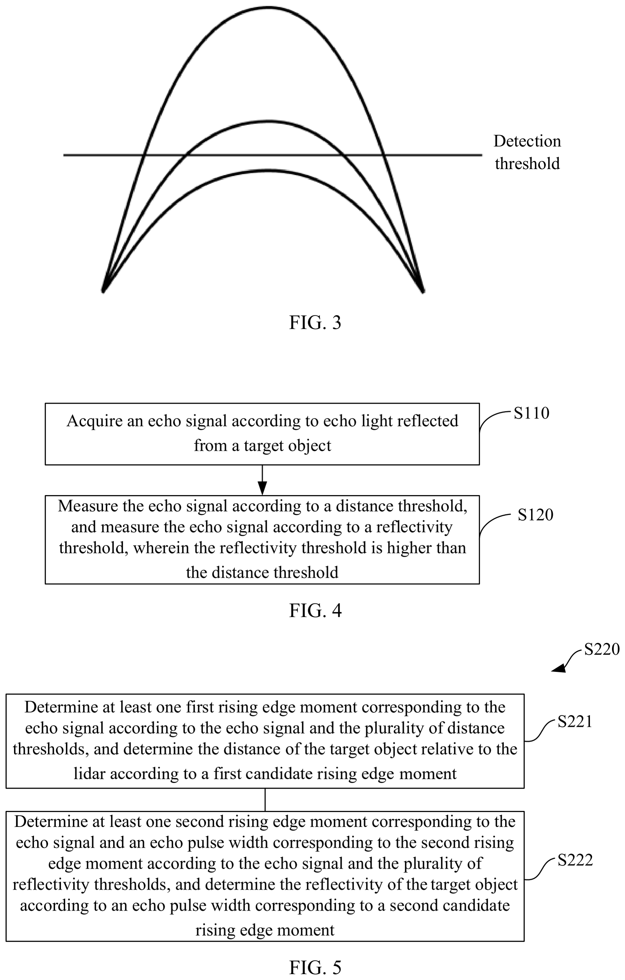

Please refer to FIG. 3 again. FIG. 3 shows an example of using the same detection threshold to detect echo signals from multiple target objects with different reflectivities at the same distance. The content shown in the figure indicates that when using a higher threshold to achieve better reflectivity differentiation, target objects with lower reflectivity at the same distance may not be detected. That is, the requirements for the threshold height for distance measurement and reflectivity are different. The optimal threshold height intervals for distance measurement and reflectivity within the same distance segment do not overlap or have very low overlap, making it difficult to achieve both optimal distance measurement accuracy and reflectivity differentiation with the same threshold.

Therefore, an embodiment of the present application provides a distance and reflectivity measurement method, which separates the thresholds for distance measurement and reflectivity, uses multiple thresholds for detection, uses a distance threshold for distance measurement, uses a reflectivity threshold for reflectivity measurement, and the reflectivity threshold is greater than the distance threshold, to achieve the best distance measurement and reflectivity differentiation effects. The executive body of this distance and reflectivity measurement method can be the laser signal processing apparatus provided by the embodiments of the present application, or an electronic device integrated with the laser signal processing apparatus, or a lidar; wherein, the laser signal processing apparatus can be implemented in hardware or software.

Please refer to FIG. 4, which is a first schematic flowchart of a distance and reflectivity measurement method according to an embodiment of the present application. The distance and reflectivity measurement method provided by the embodiment of the present application is applied to a lidar. The specific flow of the distance and reflectivity measurement method can be as follows:
S110: Acquire an echo signal according to echo light reflected from a target object.

It should be noted that the "target object" described in this application document is the detection object of the lidar, including but not limited to: vehicles, pedestrians, buildings, vegetation, and the ground; the "echo light" described in this application document is formed by the reflection of the detection light emitted by the lidar at the target object. The echo light is laser light propagating toward the lidar from the target object; the "echo signal" described in this application document is an electrical signal corresponding to the echo light, which can be obtained through a photodetector in the form of photoelectric conversion.

In this embodiment, the lidar acquires the echo signal by emitting a laser beam towards the target object and receiving the echo light reflected back from the target object. In some embodiments, the lidar includes a laser and a detector. The laser is used to generate detection light to detect the target object. When the detection light encounters the target object, part of the light is reflected by the target object to form echo light propagating toward the lidar. The detector is used to receive the echo light and perform photoelectric conversion to obtain the aforementioned echo signal.

In an example, taking an autonomous vehicle as an example:
Autonomous vehicles are usually equipped with lidar to perceive the surrounding environment. When the lidar emits detection light through the laser towards surrounding target objects such as vehicles, pedestrians, and obstacles, these target objects reflect to form echo light. The lidar further receives the echo light through the detector and converts it into an electrical signal, i.e., the aforementioned echo signal, to facilitate subsequent perception of the environment around the autonomous vehicle based on this electrical signal. For example, information such as the distance, speed, and reflectivity of the target object is calculated based on the echo signal. Based on this information, the autonomous vehicle can plan the driving path in real time, avoid collisions, and ensure driving safety.

S120: Measure the echo signal according to a distance threshold, and measure the echo signal according to a reflectivity threshold, wherein the reflectivity threshold is higher than the distance threshold.

Here, the threshold corresponds to a signal strength threshold. Only echo signals exceeding this threshold are considered valid. The distance threshold is the signal strength threshold for distance measurement used to determine the distance of the target object relative to the lidar. The reflectivity threshold is the signal strength threshold for reflectivity measurement used to determine the reflectivity of the target object.

The "threshold" described in this application document, including the distance threshold and the reflectivity threshold, can be configured through a TDC. A TDC is a circuit capable of converting time-domain signals into digital signals. In applications such as radar or ultrasonic ranging, TDCs are often used to measure the time interval between the transmitted signal and the echo signal to calculate the distance to an obstacle. It should be noted that after the echo signal is detected by the TDC, a rising edge moment and an echo pulse width can be obtained. The rising edge moment is used to calculate the distance between the target object and the lidar, and the echo pulse width is used to calculate the reflectivity of the target object. It should be further noted that the "rising edge moment" described in this application document refers to the moment when the signal crosses the threshold; since the echo signal is an analog signal, the rising edge moment refers to the moment when the signal waveform rises to the threshold. After the TDC collects the signal and converts it into a digital signal, the part of the signal below the threshold is set to zero, and the part above the threshold is set to one. The rising edge moment is the moment when the digital signal jumps from 0 to 1. In the TDC detection process, the rising edge moment of the echo signal is usually detected to determine the time point of signal arrival, which can be used to calculate the distance between the lidar and the target object. Similarly, the "falling edge moment" introduced below refers to the moment when the signal waveform falls to the threshold; since the echo signal is an analog signal, the falling edge moment refers to the moment when the signal waveform falls to the threshold. After the TDC collects the signal and converts it into a digital signal, the falling edge moment is the moment when the digital signal jumps from 1 to 0. In the TDC detection process, the falling edge moment of the echo signal is usually detected to determine the echo pulse width based on the rising edge moment and the falling edge moment. The echo pulse width refers to the time interval between the rising edge moment and the falling edge moment of the echo signal, that is, the duration of the echo signal detected by the TDC. The echo pulse width can provide certain characteristics about the target object, such as reflectivity.

In this embodiment, two different detection thresholds are configured, namely the distance threshold and the reflectivity threshold, and the reflectivity threshold is higher than the distance threshold. The distance of the target object relative to the lidar is determined by the distance threshold, and the reflectivity of the target object is measured by the reflectivity threshold.

During specific implementation, the present application is not limited to the execution order of the steps described. Without conflict, some steps can be performed in other orders or simultaneously.

From the above, it can be seen that the distance and reflectivity measurement method provided by the embodiment of the present application is applied to a lidar. The lidar acquires an echo signal according to echo light reflected from a target object, wherein the echo signal is an electrical signal corresponding to the echo light, measures the echo signal according to a distance threshold, and measures the echo signal according to a reflectivity threshold, wherein the distance threshold is used to determine the distance of the target object relative to the lidar, the reflectivity threshold is used to determine the reflectivity of the target object, and the reflectivity threshold is higher than the distance threshold. In the present application, by using different threshold values to determine the distance and reflectivity of the target object respectively, and by setting the reflectivity threshold higher than the distance threshold, high distance measurement accuracy is achieved when measuring the distance of the target object, and high reflectivity differentiation is achieved when measuring the reflectivity of the target object, thereby improving the accuracy of distance measurement result calculation and reflectivity calculation for the target object.

Based on the method described in the previous embodiments, the following will provide further detailed examples.

The distance and reflectivity measurement method is applied to a lidar and includes:
S210: Acquire an echo signal according to echo light reflected from a target object.

Step S210 is consistent with step S110 and will not be repeated here.

S220: Measure the echo signal according to a distance threshold, and measure the echo signal according to a reflectivity threshold, wherein the reflectivity threshold is higher than the distance threshold.

Through research, the applicant found that because the strength of the echo signal is inversely proportional to the square of the distance of the target object, the dynamic range of the signal over the entire distance measurement range is very large. The strength of signals such as crosstalk noise caused by close-range target objects may be higher than the strength of the real echo from a long distance. Moreover, the optimal reflectivity threshold for close range may not detect weak echoes at long distances, making reflectivity calculation impossible. Therefore, the applicant further set corresponding thresholds for different distance segments. The thresholds corresponding to different distance segments are different, and the results are fused to ensure that the distance measurement and reflectivity thresholds in each segment are in the optimal working range. Please refer to FIG. 5, which shows a flowchart of step S220. Step S220 specifically includes steps S221 and S222.

S221: Determine at least one first rising edge moment corresponding to the echo signal according to the echo signal and the plurality of distance thresholds, and determine the distance of the target object relative to the lidar according to a first candidate rising edge moment; wherein, if a first distance interval in which a distance corresponding to the first rising edge moment determined by the distance threshold is located is the same as the first distance interval corresponding to the same distance threshold, then the first rising edge moment is the first candidate rising edge moment.

It should be noted that the applicant has set different distance intervals in the distance measurement range of the lidar to correspond to different distance thresholds and reflectivity thresholds. The distance threshold and reflectivity threshold corresponding to each distance interval can be set by those skilled in the art based on empirical values summarized from actual detection scenarios, and will not be repeated here.

In this embodiment, the distance measurement range of the lidar is divided into a plurality of first distance intervals arranged sequentially according to increasing order of their upper interval limits. Between any two adjacent first distance intervals, an upper limit value of one first distance interval is equal to a lower limit value of the other first distance interval. The lidar is configured with a plurality of distance thresholds, and each first distance interval corresponds to one distance threshold. In some embodiments, adapted to the lidar equation, a first distance interval with a higher median or upper limit value corresponds to a lower distance threshold.

Specifically, when the lidar measures the echo signal according to the distance threshold, it can determine at least one first rising edge moment corresponding to the echo signal according to the echo signal and the plurality of distance thresholds. If the first distance interval in which the distance corresponding to the first rising edge moment determined by the distance threshold is located is the same as the first distance interval corresponding to the same distance threshold, then the first rising edge moment is the first candidate rising edge moment. Then, the distance of the target object relative to the lidar is determined according to the first candidate rising edge moment.

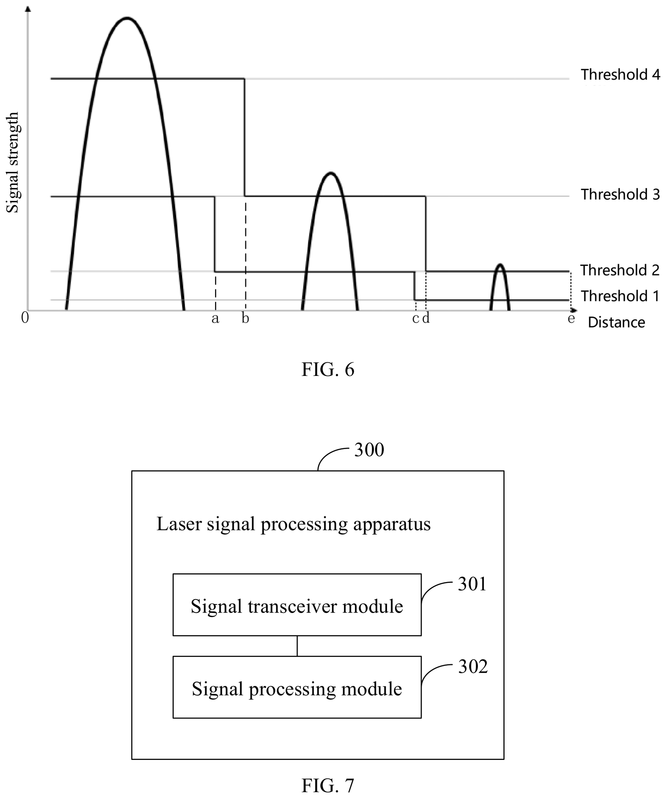

It should be noted here that when actually detecting the echo signal, each threshold (e.g., each distance threshold) works simultaneously. Therefore, each threshold may detect the signal and obtain the corresponding rising edge moment, falling edge moment, and corresponding echo pulse width. For example, in some embodiments, please refer to FIG. 6. The horizontal axis represents distance, and the vertical axis represents signal strength/amplitude. The distance measurement range of the lidar is divided into a plurality of first distance intervals. The plurality of first distance intervals are a first interval, a second interval, and a third interval arranged in order of increasing distance. The first interval is [0, D1], the second interval is [D1, D2], and the third interval is [D2, D3]. The plurality of distance thresholds are threshold 3, threshold 2, and threshold 1, respectively. Threshold 3 corresponds to the first interval, threshold 2 corresponds to the second interval, and threshold 1 corresponds to the third interval. Each threshold is higher than the noise estimate within the corresponding first distance interval. Taking the detection of the signal located in the first interval as an example, all three distance thresholds (threshold 3 to threshold 1) will detect the signal and obtain the corresponding rising edge moment, falling edge moment, and echo pulse width. The rising edge moments obtained according to the three thresholds can all determine that the target object corresponding to the echo signal is located in the first interval. However, it should be noted that because the echo signal strength decays with the square of the distance, the thresholds corresponding to the first interval, the second interval, and the third interval gradually become lower, so that echo signals at longer distances can also be detected. The thresholds 2 and 1 corresponding to the second interval and the third interval are significantly lower than threshold 3. In other words, the noise in the first interval may be higher than the thresholds of the second interval or the third interval. Therefore, the signals detected based on threshold 2 and threshold 1 may include echo signals and/or noise signals. If the rising edge moment, falling edge moment, and echo pulse width determined directly based on threshold 2 and threshold 1 are used, they cannot accurately characterize the information of the echo signal. In contrast, threshold 3 is higher than the noise estimate in this interval, so the determined signal is the correct echo signal. Based on this, in this step S221, when it is determined that the first distance interval in which the distance corresponding to the first rising edge moment determined by the distance threshold is located is the same as the first distance interval corresponding to the same distance threshold (i.e., it is the first candidate rising edge moment), this signal can be determined as an echo signal, and the distance of the target object is determined according to the first candidate rising edge moment. The method for detecting signals located in the second interval and the third interval is basically the same as that for the first interval and will not be repeated here. It should be noted that the "distance corresponding to the first rising edge moment" in this application document means half of the laser flight path within the time interval of the first rising edge moment relative to the time of detection light emission (or relative to the time of reference signal generation), that is, the calculated distance of the target object relative to the lidar, not the full flight path of the laser.

S222: Determine at least one second rising edge moment corresponding to the echo signal and an echo pulse width corresponding to the second rising edge moment according to the echo signal and the plurality of reflectivity thresholds, and determine the reflectivity of the target object according to an echo pulse width corresponding to a second candidate rising edge moment, wherein, if a second distance interval in which a distance corresponding to the second rising edge moment determined by the reflectivity threshold is located is the same as the second distance interval corresponding to the same reflectivity threshold, then the second rising edge moment is the second candidate rising edge moment.

In this embodiment, the distance measurement range of the lidar is divided into a plurality of second distance intervals arranged sequentially according to increasing order of their upper interval limits. Between any two adjacent second distance intervals, an upper limit value of one second distance interval is equal to a lower limit value of the other second distance interval. The lidar is configured with a plurality of reflectivity thresholds, and each second distance interval corresponds to one reflectivity threshold. In some embodiments, adapted to the lidar equation, a second distance interval with a higher median or upper limit value corresponds to a lower reflectivity threshold.

Specifically, when the lidar measures the echo signal according to the reflectivity threshold, it can first determine at least one second rising edge moment corresponding to the echo signal and an echo pulse width corresponding to the second rising edge moment according to the echo signal and the plurality of reflectivity thresholds. If the second distance interval in which the distance corresponding to the second rising edge moment determined by the reflectivity threshold is located is the same as the second distance interval corresponding to the same reflectivity threshold, then the second rising edge moment is the second candidate rising edge moment. Then, the reflectivity of the target object is determined according to the echo pulse width corresponding to the second candidate rising edge moment.

It should be noted here that when actually detecting the echo signal, each threshold (e.g., each reflectivity threshold) works simultaneously. Therefore, each threshold may detect the signal and obtain the corresponding rising edge moment, falling edge moment, and corresponding echo pulse width. For example, in some embodiments, please refer to FIG. 6. The horizontal axis represents distance, and the vertical axis represents signal strength/amplitude. The distance measurement range of the lidar is divided into a plurality of second distance intervals. The plurality of second distance intervals are a fourth interval, a fifth interval, and a sixth interval arranged in order of increasing distance. The fourth interval is [0, D4], the fifth interval is [D4, D5], and the sixth interval is [D5, D6]. The plurality of reflectivity thresholds are threshold 4, threshold 3, and threshold 2, respectively. Threshold 4 corresponds to the fourth interval, threshold 3 corresponds to the fifth interval, and threshold 2 corresponds to the sixth interval. Each threshold is higher than the noise estimate within the corresponding second distance interval. Taking the detection of the signal located in the fourth interval as an example, all three reflectivity thresholds (threshold 4 to threshold 2) will detect the signal and obtain the corresponding rising edge moment, falling edge moment, and echo pulse width. The rising edge moments obtained according to the three thresholds can all determine that the target object corresponding to the echo signal is located in the fourth interval. However, it should be noted that because the echo signal strength decays with the square of the distance, the thresholds corresponding to the fourth interval, the fifth interval, and the sixth interval gradually become lower. The thresholds 3 and 2 corresponding to the fifth interval and the sixth interval are significantly lower than threshold 4. In other words, the noise in the fourth interval may be higher than the thresholds of the fifth interval or the sixth interval. Therefore, the signals detected based on threshold 3 and threshold 2 may include echo signals and/or noise signals. If the rising edge moment, falling edge moment, and echo pulse width determined directly based on threshold 3 and threshold 2 are used, they cannot accurately characterize the information of the echo signal. In contrast, threshold 4 is higher than the noise estimate in this interval, so the determined signal is the correct echo signal. Based on this, in this step S222, when it is determined that the second distance interval in which the distance corresponding to the second rising edge moment determined by the reflectivity threshold is located is the same as the second distance interval corresponding to the same reflectivity threshold (i.e., it is the second candidate rising edge moment), this signal can be determined as an echo signal, and the reflectivity of the target object is determined according to the echo pulse width corresponding to the second candidate rising edge moment. The method for detecting signals located in the fifth interval and the sixth interval is basically the same as that for the fourth interval and will not be repeated here.

The above describes the methods for distance measurement and reflectivity measurement relatively independently. Generally, obtaining distance and reflectivity information in isolation based on the above methods can yield accurate information. However, in special cases, the distance obtained based on step S221 and the reflectivity obtained based on step S222 may not correspond to the same signal. Therefore, before using the information (rising edge moment, falling edge moment, pulse width information, etc.) determined by the distance threshold and the reflectivity threshold, it is necessary to determine whether the signals measured by the distance threshold and the reflectivity threshold are the same signal. The specific implementation is as follows.

In some embodiments, the distance measurement range of the lidar is divided into a plurality of first distance intervals arranged sequentially according to increasing order of their upper interval limits. Between any two adjacent first distance intervals, an upper limit value of one first distance interval is equal to a lower limit value of the other first distance interval. The lidar is configured with a plurality of distance thresholds, and each first distance interval corresponds to one distance threshold. Similarly, the distance measurement range of the lidar can also be divided into a plurality of second distance intervals arranged sequentially according to increasing order of their upper interval limits. Between any two adjacent second distance intervals, an upper limit value of one second distance interval is equal to a lower limit value of the other second distance interval. The lidar is configured with a plurality of reflectivity thresholds, and each second distance interval corresponds to one reflectivity threshold.

Similar to step S221 above, when the lidar measures the echo signal according to the distance threshold, it can determine at least one first rising edge moment corresponding to the echo signal according to the echo signal and the plurality of distance thresholds. If the first distance interval in which the distance corresponding to the first rising edge moment determined by the distance threshold is located is the same as the first distance interval corresponding to the same distance threshold, then the first rising edge moment is the first candidate rising edge moment. Note that there may be multiple first candidate rising edge moments. Similar to step S222 above, when measuring the echo signal according to the reflectivity threshold, it can determine at least one second rising edge moment corresponding to the echo signal according to the echo signal and the plurality of reflectivity thresholds. If the second distance interval in which the distance corresponding to the second rising edge moment determined by the reflectivity threshold is located is the same as the second distance interval corresponding to the same reflectivity threshold, then the second rising edge moment is the second candidate rising edge moment. Note that there may be multiple second candidate rising edge moments. Afterwards, the relationship between the first candidate rising edge moment and the second candidate rising edge moment is judged. Specifically, if the time interval between the second candidate rising edge moment and the first candidate rising edge moment is less than a preset threshold, the confidence that the second candidate rising edge moment and the first candidate rising edge moment correspond to the same signal is very high. Then, the distance of the target object relative to the lidar can be determined according to the first candidate rising edge moment, and the reflectivity of the target object can be determined according to the echo pulse width corresponding to the second candidate rising edge moment. The "time interval" between the second candidate rising edge moment and the first candidate rising edge moment can be determined by the absolute value of the difference between the second candidate rising edge moment and the first candidate rising edge moment. The preset threshold can be set by those skilled in the art based on empirical values. For example, twice the time corresponding to the distance resolution of the lidar (considering the round-trip of the signal in the time domain) can be determined as the preset threshold. When there is only one first candidate rising edge moment and one second candidate rising edge moment, the first candidate rising edge moment and the second candidate rising edge moment can be directly compared. When there are multiple first candidate rising edge moments and multiple second candidate rising edge moments, each first candidate rising edge moment can be compared with the multiple second candidate rising edge moments. A pair of first candidate rising edge moment and second candidate rising edge moment whose time interval is less than the preset threshold is determined to correspond to the same echo signal. At this time, the distance of the target object can be determined based on the first candidate rising edge moment, and the reflectivity of the target object can be determined based on the echo pulse width corresponding to the second candidate rising edge moment.

In some embodiments, the first distance interval and the second distance interval correspond one-to-one. For example, referring to FIG. 6, the distance measurement range of the lidar includes three first distance intervals and three second distance intervals. Each first distance interval has a corresponding second distance interval. The corresponding first distance interval and second distance interval mostly overlap, with a small part not overlapping. Preferably, the first distance interval can be the same as the corresponding second distance interval, which is beneficial to simplify the relationship between the threshold and the distance and simplify the allocation of thresholds.

Considering that thresholds are configured by TDCs, and each configured threshold requires one TDC, configuring a separate distance threshold for each first distance interval and a separate reflectivity threshold for each second distance interval will make the total number of thresholds equal to the sum of the number of first distance intervals and second distance intervals, which will consume a large number of TDCs and increase the hardware cost of the lidar. Based on this, in some embodiments of the present application, while ensuring the performance of distance measurement and reflectivity measurement, thresholds can be reused to reduce resource consumption. Specifically, for example, a first preset distance interval is one of the first distance intervals, a second preset distance interval is one of the second distance intervals, and the lower limit value of the second preset distance interval is greater than or equal to the upper limit value of the first preset distance interval. That is, the second preset distance interval is a distance interval farther than the first preset distance interval. The distance threshold corresponding to the first preset distance interval and the reflectivity threshold corresponding to the second preset distance interval can be the same threshold.

Next, the above embodiment will be explained with reference to FIG. 6. The distance thresholds configured by the lidar through multiple TDCs include threshold 3 corresponding to the first interval, threshold 2 corresponding to the second interval, and threshold 1 corresponding to the third interval. The reflectivity thresholds configured by the lidar through multiple TDCs include threshold 4 corresponding to the fourth interval, threshold 3 corresponding to the fifth interval, and threshold 2 corresponding to the sixth interval. That is, the distance threshold corresponding to the first interval (first preset distance interval) and the reflectivity threshold corresponding to the fifth interval (second preset distance interval) are the same threshold and can be configured via the same TDC. The distance threshold corresponding to the second interval (first preset distance interval) and the reflectivity threshold corresponding to the sixth interval (second preset distance interval) are the same threshold and can be configured via the same TDC. The above settings enable the lidar to achieve the functions of three distance thresholds and three reflectivity thresholds with only 4 TDCs from a hardware perspective, which is beneficial to reduce hardware consumption, hardware cost, and system complexity.

It is worth mentioning that since some thresholds (such as threshold 3 and threshold 2 shown in FIG. 6) are reused for both distance threshold and reflectivity threshold functions, when these thresholds detect signals, it is necessary to determine whether they are used as distance thresholds or reflectivity thresholds. Since both the first distance interval and the second distance interval are divided based on distance, thresholds with reuse functions can also distinguish whether they should be used as distance thresholds or reflectivity thresholds based on the distance interval in which the distance corresponding to the determined rising edge moment is located. Taking the detection of signals by threshold 3 as an example, if the distance corresponding to the rising edge moment determined by threshold 3 is in the first interval, then threshold 3 should be used as a distance threshold. If the distance corresponding to the rising edge moment determined by threshold 3 is in the fifth interval, then threshold 3 should be used as a reflectivity threshold. The method for determining threshold 2 as a distance threshold and reflectivity threshold is the same and will not be repeated here.

It should be understood that although the above embodiments first independently determine the first candidate rising edge moment and the second candidate rising edge moment through each threshold (distance threshold and reflectivity threshold), and then combine the first candidate rising edge moment, the second candidate rising edge moment, and the echo pulse width corresponding to the second candidate rising edge moment to further obtain distance information and reflectivity information, the present application is not limited thereto. In other methods of the present application, the distance interval in which the distance corresponding to the echo signal is located can first be determined based on the echo signal and each distance threshold. Then, the corresponding distance threshold and reflectivity threshold are determined based on the distance interval in which the distance is located. The first candidate rising edge moment is determined according to the distance threshold, and then the distance of the target object relative to the lidar is determined. The second candidate rising edge moment is determined according to the reflectivity threshold, and then the reflectivity of the target object is determined.

Specifically, the distance measurement range of the lidar can still include a plurality of first distance intervals arranged sequentially according to increasing order of their upper interval limits. Between any two adjacent first distance intervals, an upper limit value of one first distance interval is equal to a lower limit value of the other first distance interval. The lidar is configured with the plurality of distance thresholds and a plurality of reflectivity thresholds. Each first distance interval corresponds to one distance threshold and one reflectivity threshold. When detecting the echo signal, at least one first rising edge moment can be determined based on the echo signal and each distance threshold. Then, the distance threshold for detecting distance and the reflectivity threshold for detecting reflectivity are determined based on the at least one first rising edge moment. For example, the corresponding distance value can be determined based on each first rising edge moment. The expected distance value is determined based on the determined distance values. Based on the distance interval in which the expected distance value is located and the correspondence between the distance interval and the corresponding distance threshold and reflectivity threshold, the distance threshold and reflectivity threshold corresponding to the distance interval are further determined. The expected distance value can be obtained by arithmetic average or weighted average. Then, the determined distance threshold and reflectivity threshold are used to detect the echo signal to obtain the corresponding first candidate rising edge moment, second candidate rising edge moment, and the echo pulse width corresponding to the second candidate rising edge moment. Then, the distance and reflectivity of the target object are determined based on the above information.

From the above, it can be seen that the distance and reflectivity measurement method proposed in the embodiment of the present application uses different threshold values to determine the distance and reflectivity of the target object respectively, and the reflectivity threshold is higher than the distance threshold, so that high distance measurement accuracy is achieved when measuring the distance of the target object, and high reflectivity differentiation is achieved when measuring the reflectivity of the target object. In addition, it is further determined whether the rising edge moments currently detected by the distance threshold and the reflectivity threshold are data corresponding to the same signal based on the time interval between the rising edge moments detected by the distance threshold and the reflectivity threshold corresponding to the distance of the target object, that is, the aforementioned preset threshold, so as to accurately measure the distance and reflectivity of a certain object, and further improve the accuracy of distance measurement result calculation and reflectivity calculation for the target object.

An embodiment also provides a laser signal processing apparatus. Please refer to FIG. 7, which is a schematic structural diagram of a laser signal processing apparatus 300 according to an embodiment of the present application. The laser signal processing apparatus 300 is applied to a lidar. The laser signal processing apparatus 300 includes a signal transceiver module 301 and a signal processing module 302, as follows:
The signal transceiver module 301 is configured to acquire an echo signal according to echo light reflected from a target object, wherein the echo signal is an electrical signal corresponding to the echo light.

The signal processing module 302 is configured to measure the echo signal according to a distance threshold and measure the echo signal according to a reflectivity threshold, wherein the distance threshold is used for determining a distance of the target object relative to the lidar, the reflectivity threshold is used for determining a reflectivity of the target object, and the reflectivity threshold is higher than the distance threshold.

In some embodiments, the distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold; the signal processing module 302 is configured to:
determine at least one first rising edge moment corresponding to the echo signal according to the echo signal and the plurality of distance thresholds; and
determine the distance of the target object relative to the lidar according to a first candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment.

In some embodiments, the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold; the signal processing module 302 is configured to:
determine at least one second rising edge moment corresponding to the echo signal and an echo pulse width corresponding to the second rising edge moment, according to the echo signal and the plurality of reflectivity thresholds; and
determine the reflectivity of the target object according to an echo pulse width corresponding to a second candidate rising edge moment, wherein, if a second distance interval in which a distance corresponding to the second rising edge moment determined by the reflectivity threshold is located is the same as the second distance interval corresponding to the same reflectivity threshold, then the second rising edge moment is the second candidate rising edge moment.

In some embodiments, the distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold; the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold; the signal processing module 302 is configured to:
determine at least one first rising edge moment corresponding to the echo signal according to the echo signal and the plurality of distance thresholds;
determine at least one second rising edge moment corresponding to the echo signal according to the echo signal and the plurality of reflectivity thresholds; and
if a difference between the second candidate rising edge moment and the first candidate rising edge moment is less than a preset threshold, then determine the distance of the target object relative to the lidar according to the first candidate rising edge moment, and determine the reflectivity of the target object according to an echo pulse width corresponding to the second candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment, and if a second distance interval in which a distance corresponding to the second rising edge moment determined by the reflectivity threshold is located is the same as the second distance interval corresponding to the same reflectivity threshold, then the second rising edge moment is the second candidate rising edge moment.

In some embodiments, one said first distance interval corresponds to one said second distance interval, and the first distance interval is the same as the corresponding second distance interval.

In some embodiments, a first preset distance interval is one of the first distance intervals, a second preset distance interval is one of the second distance intervals, and a lower limit value of the second preset distance interval is greater than or equal to an upper limit value of the first preset distance interval; a distance threshold corresponding to the first preset distance interval and a reflectivity threshold corresponding to the second preset distance interval are the same threshold.

In some embodiments, the signal processing module 302 is configured to:
determine at least one rising edge moment according to the echo signal and a plurality of distance thresholds;
determine a distance threshold for detecting distance and a reflectivity threshold for detecting reflectivity according to the at least one first rising edge moment;
wherein, the plurality of thresholds comprise distance thresholds and reflectivity thresholds,
the distance measurement range of the lidar comprises a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with the plurality of distance thresholds and a plurality of reflectivity thresholds, and each first distance interval corresponds to one distance threshold and one reflectivity threshold.

It should be noted that the laser signal processing apparatus provided by the embodiment of the present application and the distance and reflectivity measurement method in the foregoing embodiments belong to the same concept. The laser signal processing apparatus can implement any method provided in the embodiments of the distance and reflectivity measurement method. For the specific implementation process, please refer to the embodiments of the distance and reflectivity measurement method, which will not be repeated here.

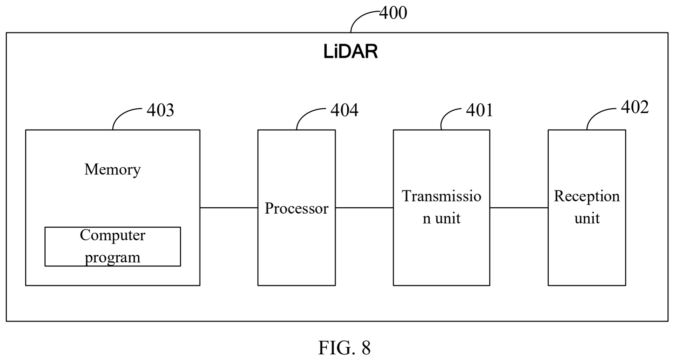

Furthermore, in order to better implement the distance and reflectivity measurement method in the embodiments of the present application, based on the distance and reflectivity measurement method, the present application also provides a lidar 400. Please refer to FIG. 8, which is a schematic structural diagram of a lidar 400 according to an embodiment of the present application. The lidar 400 may include a transmission unit 401, a reception unit 402, a memory 403, and a processor 404. The transmission unit 401, the reception unit 402, the memory 403, and the processor 404 are electrically connected.

The transmission unit 401 is configured to emit detection laser light towards a target object. The transmission unit 401 of the lidar 400 is the signal source of the lidar 400 and directly affects the performance of the lidar sensor. The main function of the transmission unit 401 is to emit laser signals of a certain wavelength and waveform with a certain power through an optical transmitter. These laser signals are reflected back when they encounter the target object, providing a source of information for the reception unit 402. The transmission unit 401 generally consists of an excitation source, a laser, a laser modulator, a beam controller, and an optical generator.

The reception unit 402 is configured to receive echo light reflected from the target object. The reception unit 402 of the lidar 400 is responsible for receiving the laser signal reflected back from the target object. Its main function is to complete photoelectric conversion, that is, to convert the received optical signal into an electrical signal for subsequent processing.

The memory 403 can be used to store computer programs and data. The computer program stored in the memory 403 includes instructions that can be executed in the processor 404. The computer program can form various functional modules. The processor 404 executes various functional applications and data processing by calling the computer program stored in the memory 403. The memory 403 may mainly include a program storage area and a data storage area. The program storage area may store an operating system, application programs required for at least one function (such as sound playback function, image playback function, etc.), etc. The data storage area may store data created according to the use of the lidar 400 (such as audio data, video data, etc.). In addition, the memory 403 may include high-speed random access memory, and may also include non-volatile memory, such as a hard disk, internal memory, a plug-in hard disk, a Smart Media Card (SMC), a Secure Digital (SD) card, a Flash Card, at least one disk storage component, a flash memory component, or other volatile solid-state storage components.

The processor 404 is the control center of the lidar 400. It connects various parts of the entire lidar 400 through various interfaces and lines. By running or calling the computer program stored in the memory 403 and calling the data stored in the memory 403, it executes various functions of the lidar 400 and processes data, thereby monitoring the lidar 400 as a whole. The processor 404 may be a Central Processing Unit (CPU), or may be other general-purpose processors, a Digital Signal Processor (DSP), an Application Specific Integrated Circuit (ASIC), a Field-Programmable Gate Array (FPGA) or other programmable logic devices, discrete gate or transistor logic devices, discrete hardware components, etc. The general-purpose processor may be a microprocessor or the processor may be any conventional processor, etc.

In this embodiment, the processor 404 in the lidar 400 loads instructions corresponding to the processes of one or more computer programs into the memory 403 according to the following steps, and runs the computer programs stored in the memory 403 through the processor 404, thereby implementing various functions:
Acquire an echo signal according to echo light reflected from a target object, wherein the echo signal is an electrical signal corresponding to the echo light; and
Measure the echo signal according to a distance threshold and measure the echo signal according to a reflectivity threshold, wherein the distance threshold is used for determining a distance of the target object relative to the lidar, the reflectivity threshold is used for determining a reflectivity of the target object, and the reflectivity threshold is higher than the distance threshold.

In some embodiments, the distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold; when the processor 404 executes the step of measuring the echo signal according to a distance threshold, it can execute: determining at least one first rising edge moment corresponding to the echo signal according to the echo signal and the plurality of distance thresholds; and
determining the distance of the target object relative to the lidar according to a first candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment.

In some embodiments, the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold; when the processor 404 executes the step of measuring the echo signal according to a reflectivity threshold, it can execute:
determining at least one second rising edge moment corresponding to the echo signal and an echo pulse width corresponding to the second rising edge moment, according to the echo signal and the plurality of reflectivity thresholds; and
determining the reflectivity of the target object according to an echo pulse width corresponding to a second candidate rising edge moment, wherein, if a second distance interval in which a distance corresponding to the second rising edge moment determined by the reflectivity threshold is located is the same as the second distance interval corresponding to the same reflectivity threshold, then the second rising edge moment is the second candidate rising edge moment.

In some embodiments, the distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold; the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold; when the processor 404 executes the step of measuring the echo signal according to a distance threshold and measuring the echo signal according to a reflectivity threshold, it can execute:
determining at least one first rising edge moment corresponding to the echo signal according to the echo signal and the plurality of distance thresholds;
determining at least one second rising edge moment corresponding to the echo signal according to the echo signal and the plurality of reflectivity thresholds; and
if a difference between the second candidate rising edge moment and the first candidate rising edge moment is less than a preset threshold, then determining the distance of the target object relative to the lidar according to the first candidate rising edge moment, and determining the reflectivity of the target object according to an echo pulse width corresponding to the second candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment, and if a second distance interval in which a distance corresponding to the second rising edge moment determined by the reflectivity threshold is located is the same as the second distance interval corresponding to the same reflectivity threshold, then the second rising edge moment is the second candidate rising edge moment.

In some embodiments, one said first distance interval corresponds to one said second distance interval, and the first distance interval is the same as the corresponding second distance interval.

In some embodiments, a first preset distance interval is one of the first distance intervals, a second preset distance interval is one of the second distance intervals, and a lower limit value of the second preset distance interval is greater than or equal to an upper limit value of the first preset distance interval; a distance threshold corresponding to the first preset distance interval and a reflectivity threshold corresponding to the second preset distance interval are the same threshold.

In some embodiments, before executing the step of measuring the echo signal according to a distance threshold and measuring the echo signal according to a reflectivity threshold, the processor 404 can also execute:
determining at least one first rising edge moment according to the echo signal and a plurality of distance thresholds;
determining a distance threshold for detecting distance and a reflectivity threshold for detecting reflectivity according to the at least one first rising edge moment;
wherein, the plurality of thresholds comprise distance thresholds and reflectivity thresholds,
the distance measurement range of the lidar comprises a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with the plurality of distance thresholds and a plurality of reflectivity thresholds, and each first distance interval corresponds to one distance threshold and one reflectivity threshold.

An embodiment of the present application also provides a computer-readable storage medium. A computer program is stored on the storage medium. When the computer program is run on a computer, the computer executes the distance and reflectivity measurement method described in any of the foregoing embodiments.

It should be noted that those of ordinary skill in the art can understand that all or part of the steps in the various methods of the above embodiments can be accomplished by instructing relevant hardware through a computer program. The computer program can be stored in a computer-readable storage medium. The storage medium can include but is not limited to: Read-Only Memory (ROM), Random Access Memory (RAM), magnetic disks, or optical disks, etc.

In addition, the terms "first", "second", and "third" in this application are used to distinguish different objects, not to describe a specific order. In addition, the terms "include" and "have" and any variations of them are intended to cover a non-exclusive inclusion. For example, a process, method, system, product, or device that includes a series of steps or units is not limited to the listed steps or units, but may include steps or units not listed or inherent to these processes, methods, products, or devices.

The above is a detailed introduction to the distance and reflectivity measurement method, apparatus, storage medium, and lidar provided by the embodiments of the present application. Specific examples are used in this document to explain the principles and implementation of the present application. The description of the above embodiments is only used to help understand the method of the present application and its core ideas. At the same time, for those skilled in the art, according to the ideas of the present application, there will be changes in the specific implementation and application scope. In summary, the content of this specification should not be construed as limiting the present application.

## Claims

1. A distance and reflectivity measurement method, applied to a lidar, comprising:
acquiring an echo signal according to echo light reflected from a target object, wherein the echo signal is an electrical signal corresponding to the echo light; and
measuring the echo signal according to a distance threshold, and measuring the echo signal according to a reflectivity threshold, wherein the distance threshold is used for determining a distance of the target object relative to the lidar, the reflectivity threshold is used for determining a reflectivity of the target object, and the reflectivity threshold is higher than the distance threshold.

2. The method according to claim 1, wherein a distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold;
the measuring the echo signal according to a distance threshold comprises:
determining at least one first rising edge moment corresponding to the echo signal according to the echo signal and the plurality of distance thresholds; and
determining the distance of the target object relative to the lidar according to a first candidate rising edge moment, wherein, if a first distance interval in which a distance corresponding to the first rising edge moment determined by the distance threshold is located is the same as the first distance interval corresponding to the same distance threshold, then the first rising edge moment is the first candidate rising edge moment.

3. The method according to claim 1, wherein a distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold;
the measuring the echo signal according to a reflectivity threshold comprises:
determining at least one second rising edge moment corresponding to the echo signal and an echo pulse width corresponding to the second rising edge moment, according to the echo signal and the plurality of reflectivity thresholds; and
determining the reflectivity of the target object according to an echo pulse width corresponding to a second candidate rising edge moment, wherein, if a second distance interval in which a distance corresponding to the second rising edge moment determined by the reflectivity threshold is located is the same as the second distance interval corresponding to the same reflectivity threshold, the second rising edge moment is the second candidate rising edge moment.

4. The method according to claim 1, wherein a distance measurement range of the lidar is divided into a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with a plurality of distance thresholds, and each first distance interval corresponds to one distance threshold; the distance measurement range of the lidar is divided into a plurality of second distance intervals arranged sequentially according to increasing order of their upper interval limits, wherein between any two adjacent second distance intervals, an upper limit value of one second distance interval is equal to a lower limit value of the other second distance interval; the lidar is configured with a plurality of reflectivity thresholds, and each second distance interval corresponds to one reflectivity threshold;
the measuring the echo signal according to a distance threshold and measuring the echo signal according to a reflectivity threshold comprise:
determining at least one first rising edge moment corresponding to the echo signal according to the echo signal and the plurality of distance thresholds;
determining at least one second rising edge moment corresponding to the echo signal according to the echo signal and the plurality of reflectivity thresholds; and
if a time interval between the second candidate rising edge moment and the first candidate rising edge moment is less than a preset threshold, then determining the distance of the target object relative to the lidar according to the first candidate rising edge moment, and determining the reflectivity of the target object according to an echo pulse width corresponding to the second candidate rising edge moment, wherein, if a first distance interval in which a distance corresponding to the first rising edge moment determined by the distance threshold is located is the same as the first distance interval corresponding to the same distance threshold, the first rising edge moment is the first candidate rising edge moment, and if a second distance interval in which a distance corresponding to the second rising edge moment determined by the reflectivity threshold is located is the same as the second distance interval corresponding to the same reflectivity threshold, the second rising edge moment is the second candidate rising edge moment.

5. The method according to any one of claims 2 to 4, wherein one said first distance interval corresponds to one said second distance interval, and the first distance interval is the same as the corresponding second distance interval.

6. The method according to claim 3, wherein a first preset distance interval is one of the first distance intervals, a second preset distance interval is one of the second distance intervals, and a lower limit value of the second preset distance interval is greater than or equal to an upper limit value of the first preset distance interval;
a distance threshold corresponding to the first preset distance interval and a reflectivity threshold corresponding to the second preset distance interval are the same threshold.

7. The method according to claim 2, wherein before the step of measuring the echo signal according to a distance threshold and measuring the echo signal according to a reflectivity threshold, the method comprises:
determining at least one first rising edge moment according to the echo signal and a plurality of distance thresholds; and
determining a distance threshold for detecting distance and a reflectivity threshold for detecting reflectivity according to the at least one first rising edge moment,
wherein the distance measurement range of the lidar comprises a plurality of first distance intervals arranged sequentially according to increasing order of their upper interval limits, wherein between any two adjacent first distance intervals, an upper limit value of one first distance interval is equal to a lower limit value of the other first distance interval; the lidar is configured with the plurality of distance thresholds and a plurality of reflectivity thresholds, and each first distance interval corresponds to one distance threshold and one reflectivity threshold.

8. A laser signal processing apparatus, comprising:
a signal transceiver module, configured to acquire an echo signal according to echo light reflected from a target object, wherein the echo signal is an electrical signal corresponding to the echo light; and
a signal processing module, configured to measure the echo signal according to a distance threshold and measure the echo signal according to a reflectivity threshold, wherein the distance threshold is used for determining a distance of the target object relative to a lidar, the reflectivity threshold is used for determining a reflectivity of the target object, and the reflectivity threshold is higher than the distance threshold.

9. A computer-readable storage medium, having a computer program stored thereon which, when executed on a computer, causes the computer to execute the method according to any one of claims 1 to 7.

10. A lidar, comprising a transmission unit, a reception unit, a memory, and a processor, wherein the transmission unit is configured to emit detection laser light towards a target object, the reception unit is configured to receive echo light reflected from the target object, the memory stores a computer program, and the processor is configured to execute the computer program to carry out the method according to any one of claims 1 to 7.
